# EUROPEAN PATENT APPLICATION

(11) **EP 4 671 312 A1**
(43) Date of publication of application: **31.12.2025**
(21) Application number: 24760229.5
(22) Date of filing: 14.02.2024
(51) Int. Cl.: C08J 3/12, B32B 27/36, C08J 3/05, C08J 7/046, C08L 29/04, C08L 67/00

(54) **POLY(3-HYDROXYALKANOATE)-BASED POWDER, AND AQUEOUS SUSPENSION**

(30) Priority: 21.02.2023 JP 2023024883
(71) Applicant: Kaneka Corporation, Osaka-shi, Osaka 530-8288 (JP)
(72) Inventor: SUGIYAMA, Hiroaki, Hyogo 676-8688 (JP)
(74) Representative: Vossius & Partner Patentanwälte Rechtsanwälte mbB
(86) International application number: PCT/JP2024/005119
(87) International publication number: WO 2024/176928

(57) **Abstract**

A poly(3-hydroxyalkanoate) powder contains a poly(3-hydroxyalkanoate) resin and a polyvinyl alcohol. The polyvinyl alcohol has a degree of saponification of 50 to 79 mol%, a 4 wt% aqueous solution of the polyvinyl alcohol has a viscosity at 20°C of 2 to 20 mPa•s, and the amount of the polyvinyl alcohol is from 2 to 10 parts by weight per 100 parts by weight of the poly(3-hydroxyalkanoate) resin. An aqueous suspension can be produced by dispersing the poly(3-hydroxyalkanoate) powder in an aqueous medium.

## Description

### Technical Field

The present invention relates to a poly(3-hydroxyalkanoate) powder and an aqueous suspension containing the powder.

### Background Art

A huge amount of petroleum-based plastics are discarded every year, and environmental pollution caused by the huge amount of waste plastics has become a serious concern. In addition, microplastics have recently caused significant harm to the marine environment.

Poly(3-hydroxyalkanoate) resins (hereinafter also referred to as P3HAs) have excellent degradability in seawater and are materials that can be a solution to the environmental problems caused by waste plastics. For example, poly(3-hydroxybutyrate-co-3-hydroxyhexanoate) is a type of P3HA, whose mechanical properties can be flexibly controlled by changing the proportion of 3-hydroxyhexanoate.

In transportation of a P3HA, it is generally more desirable, in terms of cost and quality maintenance, to transport the PHA in the form of a powder than to transport the P3HA in the form of a slurry (hereinafter also referred to as an "aqueous suspension"). To this end, methods for producing a P3HA powder by spray-drying a slurry of a P3HA have been developed (see Patent Literature 1, for example).

### Citation List

### Patent Literature

PTL 1: WO 2018/070492 A1

### Summary of Invention

### Technical Problem

One possible way of using a P3HA powder is to form a slurry by redispersing the P3HA powder in an aqueous medium, apply the slurry to a substrate, and form a P3HA resin coating on the substrate by heating and drying the applied slurry.

When the P3HA powder is redispersed in the aqueous medium, it is desirable that the dispersing of the P3HA powder in the aqueous medium can be easily accomplished with a little effort.

However, high dispersibility of the powder leads to high fluidity of the slurry, and the slurry with high fluidity can be disadvantageous for formation of a uniform resin coating on the substrate because such a slurry is likely to run down when dried after being applied to the substrate. Thus, it is difficult to ensure high dispersibility of the powder and at the same time prevent post-application running down of the slurry.

The P3HA powder described in Patent Literature 1 leaves room for improvement in this respect.

In view of the above circumstances, one aspect of the present invention aims to provide a poly(3-hydroxyalkanoate) powder that has high dispersibility in an aqueous medium and that can be dispersed in the aqueous medium to obtain an aqueous suspension resistant to post-application running down.

Another aspect of the present invention aims to provide a poly(3-hydroxyalkanoate) powder-containing aqueous suspension that contains a poly(3-hydroxyalkanoate) powder dispersed well in an aqueous medium and that is resistant to post-application running down.

### Solution to Problem

As a result of intensive studies, the present inventors have found that the above problem can be solved by having a poly(3-hydroxyalkanoate) powder contain a given amount of polyvinyl alcohol having a given level of physical properties. Based on this finding, the inventors have completed the invention.

Specifically, the present invention relates to a poly(3-hydroxyalkanoate) powder containing:
a poly(3-hydroxyalkanoate) resin; and
a polyvinyl alcohol, wherein
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

The present invention also relates to a method for producing an aqueous suspension, the method including the step of dispersing the poly(3-hydroxyalkanoate) powder in an aqueous medium.

The present invention further relates to an aqueous suspension containing:
a poly(3-hydroxyalkanoate) powder; and
an aqueous medium, wherein
the poly(3-hydroxyalkanoate) powder contains a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

The present invention further relates to a method for producing a laminate, the method including the step of applying the aqueous suspension to at least one side of a substrate and drying the aqueous suspension by heating to form a resin layer on the substrate.

The present invention further relates to a laminate including:
a substrate layer; and
a resin layer located on at least one side of the substrate layer, wherein
the resin layer contains a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

### Advantageous Effects of Invention

One aspect of the present invention can provide a poly(3-hydroxyalkanoate) powder that has high dispersibility in an aqueous medium and that can be dispersed in the aqueous medium to obtain an aqueous suspension resistant to post-application running down.

Another aspect of the present invention can provide a poly(3-hydroxyalkanoate) powder-containing aqueous suspension that contains a poly(3-hydroxyalkanoate) powder dispersed well in an aqueous medium and that is resistant to post-application running down.

By applying the aqueous suspension to a substrate and heating and drying the aqueous suspension on the substrate, a laminate having a poly(3-hydroxyalkanoate) resin layer formed on the substrate can be suitably produced. The aqueous suspension has high fluidity and can be easily applied to the substrate evenly (that is, the aqueous suspension has good application properties). In addition, the aqueous suspension undergoes an increase in viscosity and resists running down when dried by heating after being applied to the substrate. Thus, a laminate having a uniform resin coating can be produced at high productivity.

### Description of Embodiments

Hereinafter, an embodiment of the present invention will be described. The present invention is not limited to the embodiment described below.

### [Poly(3-Hydroxyalkanoate) Powder]

An embodiment according to one aspect of the present invention relates to a poly(3-hydroxyalkanoate) powder (hereinafter also referred to as a P3HA powder) containing a poly(3-hydroxyalkanoate) resin and a polyvinyl alcohol.

### [Poly(3-Hydroxyalkanoate) Resin]

The poly(3-hydroxyalkanoate) resin (hereinafter also referred to as the P3HA) is a homopolymer containing one type of 3-hydroxyalkanoate units as constituent monomer units or a copolymer containing at least one type or two or more types of 3-hydroxyalkanoate units as constituent monomer units.

The 3-hydroxyalkanoate units are preferably represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The P3HA is particularly preferably a microbially produced P3HA. In the microbially produced P3HA, all of the 3-hydroxyalkanoate units are contained as (R)-3-hydroxyalkanoate units.

The P3HA preferably contains 50 mol% or more, more preferably 60 mol% or more, even more preferably 70 mol% or more, of 3-hydroxyalkanoate units (in particular, the units represented by the formula (1)) in the total constituent monomer units. The P3HA may contain only one type or two or more types of 3-hydroxyalkanoate units as the polymer constituent monomer units or may contain other units (such as 4-hydroxyalkanoate units) in addition to the one type or two or more types of 3-hydroxyalkanoate units.

In terms of biodegradability, mechanical properties, productivity, etc., the P3HA is preferably a homopolymer of 3-hydroxybutyrate (hereinafter also referred to as 3HB) units or a copolymer containing 3HB units and other hydroxyalkanoate units and more preferably includes at least such a copolymer. Preferably, all of the 3-hydroxybutyrate units are (R)-3-hydroxybutyrate units.

The other hydroxyalkanoate units may be 3-hydroxyalkanoate units other than 3HB units or may be hydroxyalkanoate units (such as 4-hydroxyalkanoate units) other than 3-hydroxyalkanoate units. The other hydroxyalkanoate units may include only one type of hydroxyalkanoate units or two or more types of hydroxyalkanoate units.

Specific examples of the P3HA include poly(3-hydroxybutyrate) abbreviated as P3HB, poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. Among others, poly(3-hydroxybutyrate-co-3-hydroxyhexanoate) or poly(3-hydroxybutyrate-co-4-hydroxybutyrate) is preferred in terms of productivity, mechanical properties, etc. Particularly preferred is poly(3-hydroxybutyrate-co-3-hydroxyhexanoate).

The melting point and crystallinity of poly(3-hydroxybutyrate-co-3-hydroxyhexanoate) can be changed by changing the proportions of 3HB units and 3-hydroxyhexanoate (hereinafter also referred to as 3HH) units, and thus its physical properties such as Young's modulus and heat resistance can be changed and controlled to levels intermediate between those of polypropylene and polyethylene.

The P3HA may include at least two types of P3HAs differing in crystallinity. Specifically, the P3HA may include at least two types of P3HAs differing in the types and/or proportions of the constituent monomers.

The average ratio between 3-hydroxybutyrate units and other hydroxyalkanoate units in the total monomer units constituting the total P3HA contained in the P3HA powder according to the present embodiment is not limited to a particular range. In terms of mechanical properties, dispersibility, application properties, and resistance to post-application running down, the average ratio (3-hydroxybutyrate units/other hydroxyalkanoate units) is preferably from 100/0 to 80/20 (mol%/mol%), more preferably from 99/1 to 84/16 (mol%/mol%), even more preferably from 98/2 to 86/14 (mol%/mol%), and still even more preferably from 97/3 to 88/12 (mol%/mol%).

The average ratio between different monomer units in the total monomer units constituting the total P3HA can be determined by a method known to those skilled in the art, such as a method described in paragraph [0047] of WO 2013/147139 A1. The average ratio refers to the molar ratio between different monomer units in the total monomer units constituting the total P3HA. When the P3HA is a mixture of two or more resins, the average ratio refers to the molar ratio between different monomer units in the total monomer units contained in the mixture.

The weight-average molecular weight (hereinafter also referred to as Mw) of the P3HA is not limited to a particular range. In terms of mechanical properties, processability, dispersibility, application properties, and resistance to post-application running down, the weight-average molecular weight of the P3HA is preferably from 10 × 10⁴ to 100 × 10⁴, more preferably from 15 × 10⁴ to 90 × 10⁴, and even more preferably from 20 × 10⁴ to 80 × 10⁴. When the weight-average molecular weight is 10 × 10⁴ or more, sufficient mechanical properties or other desired properties can be achieved. When the weight-average molecular weight is 100 × 10⁴ or less, the crystallization speed can be high enough, and good processability can be achieved. The weight-average molecular weight of the P3HA can be determined as a polystyrene-equivalent molecular weight measured by gel permeation chromatography (GPC, "Shodex GPC-101" manufactured by Showa Denko K.K.) using a polystyrene gel ("Shodex K-804" manufactured by Showa Denko K.K.) as a column and chloroform as a mobile phase.

The P3HA is produced, for example, from a microorganism that can produce the P3HA in its cells. The microorganism used may be a microorganism isolated from the natural environment or deposited with a strain depository (e.g., IFO or ATCC) or a mutant or transformant that can be prepared from such a microorganism. The first example of bacteria that produce P3HB which is an example of the P3HA is *Bacillus megaterium* discovered in 1925, and other examples include naturally occurring microorganisms such as *Cupriavidus necator* (formerly classified as *Alcaligenes eutrophus* or *Ralstonia eutropha*) and *Alcaligenes latus.* These microorganisms are known to accumulate the P3HA in their cells.

One example of the P3HA is a copolymer of 3-hydroxybutyrate and another hydroxyalkanoate, and examples of bacteria that produce such a copolymer include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a P3HA synthase gene introduced is more preferred. Instead of the above microorganisms, a genetically modified microorganism having any suitable P3HA synthesis-related gene introduced may be used depending on the P3HA to be produced.

Alternatively, for example, the P3HA can be produced by a method described in WO 2010/013483 A1. Examples of commercially-available products corresponding to the P3HA include "Kaneka Biodegradable Polymer PHBH^{™}" of Kaneka Corporation.

### [Polyvinyl Alcohol]

The P3HA powder according to the present embodiment contains a given amount of polyvinyl alcohol (hereinafter also referred to as PVA) which has a given degree of saponification and an aqueous solution of which has a given viscosity. The inclusion of such PVA improves the dispersibility that the P3HA powder exhibits when dispersed in an aqueous medium and the application properties that an aqueous suspension resulting from the dispersing of the P3HA powder exhibits when applied to a substrate. Furthermore, the inclusion of the PVA enables the aqueous suspension to resist running down when dried by heating after being applied to the substrate.

The PVA is typically a saponification product of a vinyl ester polymer (a polymer containing at least a vinyl ester monomer as a constituent monomer). The PVA typically contains vinyl alcohol units and vinyl ester monomer units.

In the present embodiment, the PVA used has a degree of saponification of 50 to 79 mol%. The use of the PVA having a degree of saponification of 50 mol% or more improves the dispersion stability of the P3HA powder in an aqueous medium, thus allowing for formation of a uniform resin coating. In addition, the use of the PVA having a degree of saponification of 79 mol% or less allows the aqueous suspension resulting from the dispersing of the P3HA powder in the aqueous medium to undergo an increase in viscosity in response to heating. This enables the aqueous suspension to resist running down when dried by heating after application.

In terms of the resistance to post-application running down, the degree of saponification of the PVA is preferably up to 77 mol%, more preferably up to 75 mol%, and even more preferably up to 73 mol%. In terms of the dispersion stability, the degree of saponification of the PVA is preferably at least 60 mol%, more preferably at least 65 mol%, even more preferably at least 68 mol%, and particularly preferably at least 70 mol%. The PVA having such a degree of saponification can be commercially-available PVA. The degree of saponification of the PVA is measured by a method as specified in JIS K 6726.

The PVA used in the present embodiment is such that the viscosity at 20°C of a 4 wt% aqueous solution of the PVA is from 2 to 20 mPa•s. The use of the PVA for which the viscosity is 2 mPa•s or more improves the dispersion stability of the P3HA powder in an aqueous medium, thus allowing for formation of a uniform resin coating. The use of the PVA for which the viscosity is 20 mPa•s or less makes it possible to easily disperse the P3HA powder in the aqueous medium with a little effort, ensures high dispersibility of the P3HA powder in the aqueous medium, and allows the aqueous suspension resulting from the dispersing of the P3HA powder to exhibit good application properties when applied to a substrate. Furthermore, the aqueous suspension can undergo an increase in viscosity in response to heating, and this enables the aqueous suspension to resist running down when dried by heating after application.

In terms of the dispersion stability, the viscosity is preferably at least 3 mPa•s, more preferably at least 4 mPa•s, and even more preferably at least 5 mPa•s. In terms of the dispersibility, application properties, and resistance to post-application running down, the viscosity is preferably up to 15 mPa•s, more preferably at least up to 10 mPa•s, and even more preferably up to 8 mPa•s. The viscosity is a measure of the degree of polymerization of the PVA and is measured by means of a coaxial double cylinder-type rheometer.

The PVA may contain units derived from a monomer other than vinyl alcohol and vinyl ester monomers. That is, the PVA may be PVA modified with the other monomer. However, the use of unmodified PVA is preferred in terms of the resistance to post-application running down.

The amount of the PVA in the P3HA powder is set in the range of 2 to 10 parts by weight per 100 parts by weight of the P3HA contained in the P3HA powder. The fact that the amount of the PVA is 2 parts by weight or more allows the aqueous suspension to undergo an increase in viscosity in response to heating, thus enabling the aqueous suspension to resist running down when dried by heating after application. In addition, limiting the amount of the PVA to 10 parts by weight or less makes it possible to easily disperse the P3HA powder in an aqueous medium with a little effort, ensures high dispersibility of the P3HA powder in the aqueous medium, and allows the aqueous suspension resulting from the dispersing of the P3HA powder to exhibit good application properties when applied to a substrate.

In terms of the resistance to post-application running down, the amount of the PVA is preferably at least 2.5 parts by weight and more preferably at least 3 parts by weight. In terms of the dispersibility of the P3HA powder and the application properties of the aqueous suspension, the amount of the PVA is preferably up to 8 parts by weight and more preferably up to 6 parts by weight.

### [Poly(3-Hydroxyalkanoate) Powder]

As described above, the poly(3-hydroxyalkanoate) powder according to the present embodiment contains a P3HA and PVA.

The P3HA powder may consist essentially of the P3HA and the PVA, but may contain the following ingredients to the extent that they do not diminish the effect of the invention: one or more dispersants or emulsifiers other than the PVA; one or more pH adjusters; one or more inorganic fillers; one or more colorants such as pigments or dyes; one or more odor absorbers such as activated carbon and zeolite; one or more flavors such as vanillin and dextrin; one or more plasticizers; one or more oxidation inhibitors; one or more antioxidants; one or more weathering resistance improvers; one or more ultraviolet absorbers; one or more nucleating agents; one or more lubricants; one or more mold release agents; one or more water repellents; one or more antimicrobials; and one or more slidability improvers.

In addition, the P3HA powder may contain various components arising from the steps of the production method described later to the extent that such components do not diminish the effect of the invention.

The major components of the P3HA powder according to the present embodiment are the P3HA and the PVA. Specifically, the total proportion of the P3HA and the PVA in the P3HA powder may be typically from 60 to 100 wt%, may be from 80 to 100 wt%, may be from 90 to 100 wt%, may be from 95 to 100 wt%, and may be from 99 to 100 wt%. The total proportion may be up to 99.9 wt% or up to 99 wt%.

The bulk density of the P3HA powder according to the present embodiment is not limited to a particular range. In order for the P3HA powder to achieve high flowability, the bulk density of the P3HA powder is preferably from 0.3 to 0.6 kg/L and more preferably from 0.4 to 0.6 kg/L. The bulk density of the P3HA powder is measured according to a method as specified in JIS K 7365.

The mean particle diameter (D50) of the P3HA powder according to the present embodiment is not limited to a particular range. In order for the P3HA powder to achieve high flowability, the mean particle diameter of the P3HA powder is preferably from 10 to 200 µm, more preferably from 50 to 180 µm, and even more preferably from 60 to 100 µm. The mean particle diameter (D50) of the P3HA powder is measured as follows: 0.2 g of the powder as a measurement object is dispersed in 20 mL of ion-exchanged water to obtain a dispersion for measurement, and the dispersion for measurement is introduced into a laser diffraction/scattering particle size distribution analyzer, LA-950 (HORIBA, Ltd.), with which the mean particle diameter is measured.

The P3HA powder according to the present embodiment is preferably such that a pH measured for a dispersion of the powder dispersed in water at a concentration of 50 wt% is from 3 to 8. When the pH is in this range, an aqueous suspension obtained by dispersing the P3HA powder in an aqueous medium can be more resistant to post-application running down. In addition, heating-induced coloration or molecular weight loss of the P3HA can be prevented. In terms of the prevention of coloration or molecular weight loss, the pH is more preferably up to 7, even more preferably up to 6, particularly preferably up to 5, and most preferably up to 4. In terms of the resistance to post-application running down, the pH is more preferably at least 4, even more preferably at least 5, and particularly preferably at least 6.

As described later, the P3HA powder according to the present embodiment is suitable for being dispersed in an aqueous medium to prepare an aqueous suspension. However, the P3HA powder according to the present embodiment is not limited to this use and may be used to form any of various molded articles such as a film, a sheet, a tube, a plate, a rod, a container (e.g., a bottle), a bag, and a part.

### [Method for Producing P3HA Powder]

The production of the P3HA powder according to the present embodiment is not limited to using a particular method. However, the P3HA powder can be suitably produced by performing the following steps (a) and (b) sequentially.
- Step (a): The step of adding PVA to an aqueous P3HA suspension.
- Step (b): The step of spray-drying the aqueous suspension prepared in the step (a).

### (Step (a))

In the step (a) of the production method, the particular PVA described above is added to an aqueous P3HA suspension. In the aqueous P3HA suspension, the P3HA is dispersed in an aqueous medium. In the present specification, an aqueous suspension containing a P3HA is sometimes simply referred to as an "aqueous P3HA suspension".

The step (a) preferably includes the following steps (a1) and (a2).
- Step (a1): The step of adding PVA to an aqueous P3HA suspension.
- Step (a2): The step of adjusting the pH of the aqueous P3HA suspension to 8 or less.

The steps (a1) and (a2) are not limited to being performed in a particular order. In terms of preventing aggregation of the P3HA in the step (a2) and obtaining an aqueous suspension with better dispersion stability of the P3HA, it is preferable to perform the step (a1) first and then perform the step (a2).

The aqueous P3HA suspension used as a starting material in the step (a) can be, for example, but is not limited to being, obtained by a method including: a culture step of culturing a microorganism having the ability to produce a P3HA in its cells; and a purification step of, after the culture step, decomposing and/or removing substances other than the P3HA.

The method for producing the P3HA powder according to the present embodiment may include the step of obtaining the aqueous P3HA suspension (such as a step including the culture step and the purification step mentioned above) before the step (a). The microorganism used in this step may be, for example, a microorganism as previously described.

A P3HA-containing microorganism prepared by culturing the above microorganism contains a large amount of cellular components as impurities. Thus, a purification step may be usually carried out to decompose and/or remove the impurities or any substances other than the P3HA. This purification step is not limited to using a particular technique, and any physical, chemical, or biological treatment conceivable by those skilled in the art can be employed. For example, the purification method described in WO 2010/067543 A1 can be preferably used.

The impurity content in the end product depends largely on the purification step. Thus, the amount of the impurities is preferably reduced as much as possible by the purification step. Depending on the intended use of the end product, the end product may contain some amount of impurities to the extent that the impurities do not diminish the physical properties of the end product. However, when the end product is intended for medical or other purposes that require a high-purity P3HA, it is preferable to minimize the amount of impurities in the end product. An example of the measure of the degree of purification is the protein content in the aqueous P3HA suspension. The protein content is preferably 30000 ppm or less, more preferably 15000 ppm or less, even more preferably 10000 ppm or less, and most preferably 7500 ppm or less per weight of the P3HA. The purification is not limited to using particular means. For example, a known method as mentioned above can be employed.

The aqueous medium as a constituent of the aqueous P3HA suspension may be water or a solvent mixture of water and a water-miscible organic solvent. The concentration of the water-miscible organic solvent in the solvent mixture is not limited to a particular range and may be any concentration equal to or lower than the water solubility of the organic solvent used. The water-miscible organic solvent is not limited to a particular type, and any of the organic solvents mentioned below can be used as appropriate. The aqueous medium as a constituent of the aqueous P3HA suspension may contain other substances such as another solvent, a cellular component, and a compound formed during the purification to the extent that the other substances do not diminish the effect of the invention.

The proportion of water in the total aqueous medium as a constituent of the aqueous P3HA suspension is not limited to a particular range but preferably 5 wt% or more, more preferably 10 wt% or more, even more preferably 30 wt% or more, still even more preferably 50 wt% or more, particularly preferably 70 wt% or more, and most preferably 90 wt% or more. The upper limit of the proportion is not limited to a particular value, and the proportion may be up to 100 wt%.

### <Other Issues>

Before being subjected to the step (a), the aqueous P3HA suspension usually has a pH of more than 8 as a result of the purification step described above. For this reason, the aqueous P3HA suspension obtained in the step (a1) can have a pH of more than 8. Thus, the pH of the aqueous P3HA suspension is preferably adjusted to 8 or less by the step (a2). An example of the pH adjustment method is, but not limited to, addition of an acid. The acid is not limited to a particular type and may be either an organic acid or an inorganic acid, and it does not matter whether the acid is volatile. Specific examples of acids that can be used include sulfuric acid, hydrochloric acid, phosphoric acid, and acetic acid.

The pH that the aqueous P3HA suspension has as a result of the adjustment step is preferably up to 8. Adjusting the pH of the aqueous P3HA suspension to 8 or less makes it possible to reduce the coloration of the P3HA during heating and melting and prevent the molecular weight loss of the P3HA during heating and/or drying. In terms of reducing the coloration of the P3HA during heating and melting and ensuring the stability of the molecular weight of the P3HA during heating and/or drying, the pH is more preferably 7 or less, even more preferably 6 or less, still even more preferably 5 or less, and particularly preferably 4 or less. In terms of the acid resistance of a container holding the aqueous P3HA suspension, the pH is preferably at least 1, more preferably at least 2, and even more preferably at least 3.

The concentration of the P3HA in the aqueous P3HA suspension obtained by the step (a) is preferably 30 wt% or more, more preferably 40 wt% or more, and even more preferably 50 wt% or more since such a P3HA concentration is economically advantageous in terms of drying utility and leads to improved productivity. The P3HA concentration is preferably up to 65 wt% and more preferably up to 60 wt% in order to avoid the risk that the P3HA reaches a closest-packing state which causes the aqueous P3HA suspension to fail to have sufficient fluidity. Examples of methods for adjusting the P3HA concentration include, but are not limited to: addition of the aqueous medium; and removal of part of the aqueous medium (such as centrifugation followed by supernatant removal). The adjustment of the P3HA concentration may be performed at any time in the step (a) or may be performed before the step (a).

### (Step (b))

In the step (b), the aqueous suspension prepared in the step (a) (i.e., an aqueous suspension containing a P3HA and PVA) is spray-dried. Examples of the spray-drying method include a method in which fine droplets of the aqueous suspension are fed into a dryer and dried in contact with hot air in the dryer. Examples of the means (atomizer) for feeding the fine droplets of the aqueous suspension into the dryer include, but are not limited to, known means such as the use of a rotary disc or the use of a nozzle. Examples of how to bring the droplets into contact with the hot air in the dryer include, but are not limited to, a parallel-flow method, a counterflow method, and a combination of these methods.

The drying temperature in the spray drying of the step (b) may be any temperature at which most of the aqueous medium can be removed from the droplets of the aqueous suspension. The temperature conditions can be set as appropriate so that drying to an intended moisture content can be achieved while minimizing the risk of undesired phenomena such as quality degradation (including molecular weight loss, color quality deterioration, etc.) and melting. For example, the temperature of the hot air blown into the spray dryer can be selected as appropriate in the range of 100 to 300°C. The volume of the hot air in the dryer can also be set as appropriate depending on factors such as the size of the dryer.

### [Aqueous P3HA Powder Suspension]

An embodiment according to another aspect of the present invention relates to an aqueous suspension containing the above-described P3HA powder (powder containing a P3HA and PVA) and an aqueous medium (this aqueous suspension will be hereinafter also referred to as the aqueous P3HA powder suspension). In the aqueous P3HA powder suspension, the P3HA powder is dispersed in the aqueous medium.

The details of the P3HA powder contained in the aqueous P3HA powder suspension according to the present embodiment are the same as those of the above-described P3HA powder and will therefore not be described below.

The aqueous medium contained in the aqueous P3HA powder suspension may be water or a solvent mixture of water and a water-miscible organic solvent. The concentration of the water-miscible organic solvent in the solvent mixture is not limited to a particular range and may be any concentration equal to or lower than the water solubility of the organic solvent used. Examples of the water-miscible organic solvent include, but are not limited to: alcohols such as methanol, ethanol, 1-propanol, 2-propanol, 1-butanol, 2-butanol, isobutanol, pentanol, hexanol, and heptanol; ketones such as acetone and methyl ethyl ketone; ethers such as tetrahydrofuran and dioxane; nitriles such as acetonitrile and propionitrile; amides such as dimethylformamide and acetamide; dimethylsulfoxide; pyridine; and piperidine. Among these solvents, methanol, ethanol, 1-propanol, 2-propanol, 1-butanol, 2-butanol, isobutanol, acetone, methyl ethyl ketone, tetrahydrofuran, dioxane, acetonitrile, and propionitrile are preferred since they are easy to remove. Methanol, ethanol, 1-propanol, 2-propanol, butanol, and acetone are more preferred since they are easily available. Particularly preferred are methanol, ethanol, and acetone.

The proportion of water in the total aqueous medium as a constituent of the aqueous P3HA powder suspension is not limited to a particular range but preferably 5 wt% or more, more preferably 10 wt% or more, even more preferably 30 wt% or more, still even more preferably 50 wt% or more, particularly preferably 70 wt% or more, and most preferably 90 wt% or more. The upper limit of the proportion is not limited to a particular value, and the proportion may be up to 100 wt%.

The proportion of the P3HA powder (hereinafter also referred to as the P3HA powder concentration) in the aqueous P3HA powder suspension is preferably 20 wt% or more in order to make the aqueous suspension more resistant to post-application running down and improve the post-application drying properties of the aqueous suspension. The P3HA powder concentration is more preferably 30 wt% or more, more preferably 35 wt% or more, still even more preferably 40 wt% or more, and particularly preferably 45 wt% or more. The P3HA powder concentration is preferably up to 65 wt%, more preferably up to 60 wt%, and even more preferably up to 55 wt% in order to avoid the risk that the P3HA powder reaches a closest-packing state which causes the aqueous P3HA powder suspension to fail to have sufficient fluidity.

The aqueous P3HA powder suspension preferably has a pH of 3 to 8. When the pH is in this range, the suspension can be more resistant to post-application running down, and heating-induced coloration or molecular weight loss of the P3HA can be prevented. In terms of the prevention of coloration or molecular weight loss, the pH is more preferably up to 7, even more preferably up to 6, particularly preferably up to 5, and most preferably up to 4. In terms of safety and in order to reduce the corrosion of a container holding the aqueous suspension or a substrate to which the aqueous suspension is applied in the case where the container or substrate is made of metal, the pH is more preferably at least 4, more preferably at least 5, and particularly preferably at least 6.

The aqueous P3HA powder suspension may contain the following ingredients to the extent that they do not diminish the effect of the invention: one or more dispersants or emulsifiers; one or more pH adjusters; one or more inorganic fillers; one or more colorants such as pigments or dyes; one or more odor absorbers such as activated carbon and zeolite; one or more flavors such as vanillin and dextrin; one or more plasticizers; one or more oxidation inhibitors; one or more antioxidants; one or more weathering resistance improvers; one or more ultraviolet absorbers; one or more nucleating agents; one or more lubricants; one or more mold release agents; one or more water repellents; one or more antimicrobials; and one or more slidability improvers.

In addition, the aqueous P3HA powder suspension may contain various components arising from the steps of the production method described later to the extent that such components do not diminish the effect of the invention.

The major components of the aqueous P3HA powder suspension according to the present embodiment are the above-described P3HA powder and an aqueous medium. Specifically, the proportion of the P3HA powder in the total solids of the aqueous P3HA powder suspension may be typically from 60 to 100 wt%, may be from 80 to 100 wt%, may be from 90 to 100 wt%, may be from 95 to 100 wt%, and may be from 99 to 100 wt%. The proportion of the P3HA powder may be up to 99 wt% or up to 95 wt%.

The volume median diameter of the P3HA powder in the aqueous P3HA powder suspension (this volume median diameter will be hereinafter also referred to as the "P3HA powder volume median diameter") is preferably up to 50 times the volume median diameter of the primary particles of the P3HA powder (this volume median diameter will be hereinafter also referred to as the "primary particle diameter"). When the P3HA powder volume median diameter in the aqueous P3HA powder suspension is up to 50 times the volume median diameter of the primary particles, the aqueous P3HA powder suspension has higher fluidity, thanks to which the aqueous P3HA powder suspension tends to exhibit better application properties when applied to a substrate. The P3HA powder volume median diameter is more preferably up to 20 times, even more preferably up to 10 times, the volume median diameter of the primary particles.

In order for the aqueous P3HA powder suspension to achieve high fluidity, the P3HA powder volume median diameter is preferably from 0.5 to 5.0 µm, more preferably from 1.0 to 4.5 µm, and even more preferably from 1.0 to 4.0 µm. The P3HA powder volume median diameter in the aqueous suspension is measured by a method described in Examples using LA-950, a laser diffraction/scattering particle size distribution analyzer manufactured by HORIBA, Ltd.

The P3HA powder volume median diameter in the aqueous suspension can be used as a measure of the dispersed state of the P3HA in the aqueous P3HA powder suspension. The adjustment of the P3HA powder volume median diameter is not limited to using a particular method and can be accomplished by known means (such as stirring). For example, in the event that the aqueous P3HA powder suspension has lost the dispersed state of the P3HA powder for a reason such as exposure to acidic conditions, the P3HA powder in the aqueous P3HA powder suspension can be restored to a desired dispersed state (e.g., a state in which the P3HA powder has a primary particle diameter as described above) by subjecting the aqueous P3HA powder suspension to a physical, chemical, or biological treatment conceivable by those skilled in the art.

The aqueous P3HA powder suspension according to the present embodiment can be produced by dispersing the above-described P3HA powder in an aqueous medium. Thanks to the use of the P3HA powder having high dispersibility, the aqueous suspension according to the present embodiment can be produced at high productivity and can resist running down when dried by heating after being applied as a coating liquid to a substrate.

The production of the aqueous P3HA powder suspension is not limited to using a particular technique. Preferably, the P3HA powder is dispersed in an aqueous medium, and then the dispersion is exposed to mechanical shear to separate partially-aggregated P3HA powder particles from one another. The exposure to mechanical shear is preferred since it can substantially eliminate aggregates and result in an aqueous suspension containing a P3HA powder with a uniform particle diameter. The exposure to mechanical shear can be accomplished by means such as a shear mill, a stirrer, a homogenizer, or ultrasound.

After the P3HA powder is dispersed in an aqueous medium, the pH of the resulting aqueous suspension may be adjusted. Alternatively, the pH of an aqueous medium may be adjusted, and then the P3HA powder may be dispersed in the aqueous medium. An example of the pH adjustment method is, but not limited to, addition of an acid. The acid is not limited to a particular type and may be either an organic acid or an inorganic acid, and it does not matter whether the acid is volatile. Specific examples of acids that can be used include sulfuric acid, hydrochloric acid, phosphoric acid, and acetic acid.

Such a pH adjustment step need not be performed. In the case mentioned above where the pH measured for a dispersion of the P3HA powder dispersed in water at a concentration of 50 wt% is from 3 to 8, an aqueous P3HA powder suspension having a pH of 3 to 8 can easily be obtained by the use of the P3HA powder without having to perform the pH adjustment step described above.

As described later, the aqueous P3HA powder suspension according to the present embodiment is suitable for use as an aqueous coating liquid for being applied to and dried on a substrate to form a resin coating on the substrate. However, the aqueous P3HA powder suspension according to the present embodiment is not limited to this use and may be used as a material for impregnation, a material for a composite, a building material, a plastic modifier, or an adhesive.

### [Laminate and Laminate Production Method]

A laminate can be produced by applying the aqueous P3HA powder suspension according to the present embodiment to one side or both sides of a substrate, and then by heating and drying the aqueous P3HA powder suspension to form a resin layer containing a P3HA and PVA on the substrate. Such a laminate production method and the resulting laminate are also aspects of the present invention.

The substrate is not limited to a particular type, and substrates made of various materials can be used. In terms of enhancing the overall biodegradability of the resulting laminate, the substrate is preferably biodegradable.

Examples of the biodegradable substrate include, but are not limited to, paper (composed mainly of cellulose), cellophane, cellulose ester, polyvinyl alcohol, polyamino acid, polyglycolic acid, pullulan, and wood. Paper or cellophane is preferred because they have high heat resistance and are inexpensive, and paper is particularly preferred. The paper used is not limited to a particular type, and examples of the paper include cup paper, kraft paper, high-quality paper, coated paper, tissue paper, glassine paper, and paperboard. The paper may, if necessary, contain an additive such as a waterproofing agent, a water repellent, or an inorganic substance.

The substrate may be one subjected to a surface treatment such as corona treatment, flame treatment, or anchor coat treatment in advance. One of such surface treatments may be performed alone, or two or more surface treatments may be used in combination.

The application of the aqueous P3HA powder suspension to the substrate is not limited to using a particular technique, and any known method able to form a resin layer on the substrate can be used as appropriate. Specifically, a spray method, a spreading method, a slit coater method, an air knife coater method, a roll coater method, a bar coater method, a comma coater method, a blade coater method, a screen printing method, or a gravure printing method can be used. The application of the aqueous suspension may be preceded by the step of subjecting the substrate to a surface treatment such as corona treatment.

The post-application drying process can be performed using a known heating technique. Examples of the heating technique include hot air heating, infrared heating, ultrasound irradiation, microwave heating, roll heating, and hot plate heating. One of these techniques may be used alone, or two or more thereof may be used in combination. Conventionally, the applied coating is likely to run down during the drying process, and such running down is often an obstacle to the formation of a uniform resin coating. With the use of the aqueous P3HA powder suspension according to the present embodiment, the running down can be avoided to form a highly-uniform resin coating.

In the post-application drying process, the coating formation may be carried out by heating at a temperature that can cause melting of the P3HA which is a major resin component of the resin layer. In this case, the P3HA in the resin layer melts temporarily and then becomes cooled and solidified. As a result, the resin layer can have a smooth surface, and the adhesion between the substrate layer and the resin layer can be enhanced.

From the above perspective, the heating temperature in the post-application drying process is preferably from 130°C to 180°C. The heating time may be, for example, from 10 seconds to 10 minutes.

Each of the application and drying steps described above may be performed in a batch fashion. Alternatively, each step may be performed continuously while the substrate in the form of a film is transferred on a plurality of rolls.

The weight of the P3HA per unit area of the resin layer (this weight will be hereinafter also referred to as the weight per square meter) is not limited to a particular range and may be from about 5 to about 100 g/m². When the weight per square meter is in this range, the resin layer can be prevented from having defects such as pinholes, can have sufficient strength for practical use, and can effectively exhibit properties such as water resistance.

The thickness of the resin layer is not limited to a particular range. In terms of preventing water absorption and ensuring flexibility, the thickness of the resin layer may be from about 5 to about 100 µm.

A laminate according to the present aspect includes at least a substrate layer and a resin layer containing a P3HA and PVA and located on one side or both sides of the substrate layer. The laminate may consist only of these layers or may further include another layer. Examples of the other layer include a gas barrier layer, a printed layer, and another resin layer. The gas barrier layer may be a known gas barrier layer, examples of which include a metal foil, a vapor-deposited metal coating, a vapor-deposited metal oxide coating, a vapor-deposited silicon oxide coating, a polyvinyl alcohol film, and an ethylene-vinyl alcohol copolymer film. The gas barrier layer may be bonded to the substrate via an adhesive layer.

The laminate according to the present aspect can be formed into any kind of molded article by secondary processing. Examples of the molded article include a tube, a plate, a rod, a packaging material (e.g., a bag), a container (e.g., a bottle), and a part. In particular, the molded article is suitable for use as any of various kinds of packaging materials or containers such as shopping bags, various other kinds of bags, packaging materials for foods or confectionery products, cups, trays, and cartons in various fields such as food industry, cosmetic industry, electronic industry, medical industry, and pharmaceutical industry. The molded article is particularly suitable for use as a container for a hot substance. Examples of such a container include: liquid containers such as, in particular, cups for foods or beverages such as instant noodles, instant soups, and coffee; and trays used for prepared foods, boxed lunches, or microwavable foods.

The secondary processing can be performed using any method known in the art. For example, the secondary processing can be performed by means such as any kind of bag-making machine or form-fill-seal machine. Alternatively, the laminate may be processed using a device such as a paper cup molding machine, a punching machine, or a case former. In any of these processing machines, any known technique can be used for bonding of the laminate. Examples of the technique that can be used include heat sealing, impulse sealing, ultrasonic sealing, high-frequency sealing, hot air sealing, and flame sealing. In particular, the molded article is preferably a product obtained by secondary processing using heat sealing. The heat sealing may be performed between the substrate layer and the resin layer or between different portions of the resin layer.

The molded article may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the molded article according to the present aspect. The material of the other molded article is also preferably biodegradable.

In the following items, preferred aspects of the present disclosure are listed. The present invention is not limited to the following items.

### [Item 1]

A poly(3-hydroxyalkanoate) powder containing:
a poly(3-hydroxyalkanoate) resin; and
a polyvinyl alcohol, wherein
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

### [Item 2]

The poly(3-hydroxyalkanoate) powder according to item 1, wherein a pH measured for a dispersion of the poly(3-hydroxyalkanoate) powder dispersed in water at a concentration of 50 wt% is from 3 to 8.

### [Item 3]

The poly(3-hydroxyalkanoate) powder according to item 1 or 2, wherein the poly(3-hydroxyalkanoate) resin includes a copolymer of 3-hydroxybutyrate units and other hydroxyalkanoate units.

### [Item 4]

The poly(3-hydroxyalkanoate) powder according to item 3, wherein the other hydroxyalkanoate units are 3-hydroxyhexanoate units.

### [Item 5]

A method for producing an aqueous suspension, including the step of dispersing the poly(3-hydroxyalkanoate) powder according to any one of items 1 to 4 in an aqueous medium.

### [Item 6]

An aqueous suspension containing:
a poly(3-hydroxyalkanoate) powder; and
an aqueous medium, wherein
the poly(3-hydroxyalkanoate) powder contains a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

### [Item 7]

The aqueous suspension according to item 6, wherein a proportion of the poly(3-hydroxyalkanoate) powder in the aqueous suspension is from 20 to 65 wt%.

### [Item 8]

The aqueous suspension according to item 6 or 7, wherein the aqueous suspension has a pH of 3 to 8.

### [Item 9]

The aqueous suspension according to any one of items 6 to 8, wherein the aqueous suspension is an aqueous coating liquid.

### [Item 10]

A method for producing a laminate, including the step of applying the aqueous suspension according to any one of items 6 to 9 to at least one side of a substrate and drying the aqueous suspension by heating to form a resin layer on the substrate.

### [Item 11]

A laminate including:
a substrate layer; and
a resin layer located on at least one side of the substrate layer, wherein
the resin layer contains a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

### Examples

Hereinafter, the present invention will be specifically described based on examples. The technical scope of the present invention is not limited by these examples.

### [Methods for Measurement and Evaluation]

The measurement and evaluation in Examples and Comparative Examples were performed using the methods described below.

### (Method for Measuring Viscosity of Aqueous Suspension)

The viscosity of the aqueous suspension was measured using a modular compact rheometer (Anton Paar) with a Peltier temperature control system for coaxial double cylinders. The measurement was performed at different shear rates ranging from 10 s⁻¹ to 100 s⁻¹ and different temperatures of 25°C, 40°C, and 50°C.

### (Method for Calculating Bingham Yield Stress of Aqueous Suspension)

Shear stress data was obtained at different shear rates in the same manner as viscosity data was obtained as described in the previous paragraph. First-order approximation data of the shear stress-versus-shear rate relationship was created from the obtained 11 pieces of shear stress data (at shear rates of 10 s⁻¹, 12.6 s⁻¹, 15.9 s⁻¹, 20 s⁻¹, 25.1 s⁻¹, 31.6 s⁻¹, 39.8 s⁻¹, 50.1 s⁻¹, 63.1 s⁻¹, 79.4 s⁻¹, and 100 s⁻¹), and the intercept of the first-order approximation data (the stress at a shear rate of 0) was calculated as the Bingham yield stress. In the cases where the calculated value was 0 or less, the Bingham yield stress was assumed to be 0.

If the Bingham yield stress of an aqueous suspension is zero, this means that the aqueous suspension can flow without any force exerted on the aqueous suspension and indicates that the dispersibility of the powder in the aqueous suspension and the application properties of the aqueous suspension are good. If the Bingham yield stress of an aqueous suspension has a positive value, this means that a force is needed to cause the aqueous suspension to flow and indicates that the aqueous suspension is resistant to post-application running down.

### (Method for Measuring Primary Particle Diameter of P3HA Powder)

The spray-drying liquid to be subjected to spray drying was diluted with ion-exchanged water to a solids concentration of 5 wt% to obtain a dispersion for measurement. The dispersion for measurement was introduced into and analyzed by a laser diffraction/scattering particle size distribution analyzer, LA-950 (HORIBA, Ltd.). The volume median diameter (D50) obtained was adopted as a measured value of the primary particle diameter of the P3HA powder.

### (Method for Measuring Mean Particle Diameter of P3HA Powder)

An amount of 0.2 g of the powder as a measurement object was added and dispersed in 20 mL of ion-exchanged water to obtain a dispersion for measurement. The dispersion for measurement was introduced into and analyzed by a laser diffraction/scattering particle size distribution analyzer, LA-950 (HORIBA, Ltd.). The volume median diameter (D50) obtained was adopted as a measured value of the mean particle diameter of the P3HA powder.

### (Method for Measuring Volume Median Diameter of P3HA Powder in Aqueous Suspension)

The aqueous P3HA powder suspension was diluted with ion-exchanged water to a solids concentration of 5 wt% to obtain a dispersion for measurement. The dispersion for measurement was introduced into and analyzed by a laser diffraction/scattering particle size distribution analyzer, LA-950 (HORIBA, Ltd.). The volume median diameter (D50) obtained was adopted as a measured value of the volume median diameter of the P3HA powder in the aqueous suspension.

### [Example 1]

### (Preparation of Cell Culture Fluid)

Microbial culture was performed in the same manner as in Comparative Example 3 of WO 2019/142717 A1 to obtain a cell culture fluid containing microbial cells containing a P3HA. The ratio between the repeating units (3-hydroxybutyrate unit/3-hydroxyhexanoate unit ratio) in the P3HA was measured and found to be 89.9/10.1 (mol/mol).

### (Deactivation)

The cell culture fluid obtained as above was sterilized by heating and stirring it at an internal temperature of 70°C for 8 hours.

### (Molecular Weight Adjustment)

To the sterilized culture fluid (deactivated culture fluid) obtained as above was added 30% sodium hydroxide to adjust the pH of the culture fluid to 10.0 ± 1.0. The internal temperature of the culture fluid was maintained at 70 ± 2°C for 19 hours to adjust the molecular weight of the P3HA contained in the cells. The adjusted weight-average molecular weight was 25 × 10⁴.

### (Enzymatic Treatment)

To the fluid obtained by the above molecular adjustment (molecular weight-adjusted fluid) was added 95% sulfuric acid to adjust the pH of the fluid to 7.0 ± 0.2. IW (industrial water) was added to adjust the solids concentration of the fluid to 18%, and this was followed by adding lysozyme (manufactured by FUJIFILM Wako Pure Chemical Corporation) which is an enzyme (lytic enzyme) that breaks down sugar chains (peptide glycan) in cell walls and by keeping the fluid at 50°C for 2 hours. After that, Alcalase 2.5 L (manufactured by Novozymes), which is an alkaline protease, was added and then 30% sodium hydroxide was added at 50°C to adjust the pH of the fluid to 9.0. The resulting fluid was kept at 50°C for 2 hours.

### (Bacteriolysis and Concentration)

To the enzymatically-treated fluid obtained as above was added 30% sodium hydroxide to adjust the pH of the enzymatically-treated fluid to 10.5 (alkaline washing). Next, sodium dodecyl sulfate (SDS, manufactured by Kao Corporation) was added to the enzymatically-treated fluid at a concentration of 0.6 to 1.0 wt% (surfactant treatment). After that, the pH of the enzymatically-treated fluid was adjusted to 11.0 ± 0.2 by means of 30% sodium hydroxide, and the enzymatically-treated fluid was diluted to two times by adding an aqueous sodium hydroxide solution having a pH of 11.0.

The enzymatically-treated fluid was concentrated to two times by centrifugation (4500 rpm, 10 minutes) followed by supernatant removal. To the concentrated aqueous P3HA suspension was added an aqueous sodium hydroxide solution (pH = 11.0) whose volume was equal to that of the removed supernatant. The aqueous P3HA suspension was then centrifuged (4500 rpm, 10 minutes) and the supernatant was removed. This step was repeated.

After the supernatant removal, water was added to suspend the P3HA again. A protease (Esperase manufactured by Novozymes) was added to the aqueous suspension, which was stirred for 2 hours while being kept at 45°C and a pH of 11. After that, the aqueous suspension was concentrated to two times by centrifugation (4500 rpm, 10 minutes) followed by supernatant removal. To the concentrated aqueous suspension was added an aqueous sodium hydroxide solution (pH = 11.0) whose volume was equal to that of the removed supernatant, and the aqueous suspension was centrifuged (4500 rpm, 10 minutes). Finally, the supernatant was removed to obtain an aqueous P3HA suspension with the P3HA concentration adjusted to 54 ± 2 wt%. The P3HA volume median diameter (D50) in the aqueous suspension was 3.3 µm.

### (Spray Drying)

To the aqueous P3HA suspension (solids concentration = 50%) obtained as above was added a polyvinyl alcohol (PVA known under the trade name Kuraray Poval L-508W, degree of saponification = 72.5 mol%, viscosity at 20°C of 4 wt% aqueous solution = 6.5 mPa•s). The amount of the added PVA was 3.0 parts by weight on a solids basis (3.0 parts by weight per 100 parts by weight of the P3HA present in the aqueous suspension). The addition of the PVA was followed by adjusting the solids concentration of the suspension to 45.9 wt%. The suspension was stirred for 30 minutes, after which sulfuric acid was added to adjust and stabilize the pH of the suspension at 4. The P3HA volume median diameter (D50) measured for the resulting aqueous suspension (spray-drying liquid) was 3.3 µm. This volume median diameter corresponds to the primary particle diameter of the P3HA powder. The weight-average molecular weight of the P3HA was 22 × 10⁴.

The aqueous P3HA suspension obtained as above was fed into an atomizer by means of a general-purpose spray dryer, OC-16 manufactured by Ohkawara Kakohki Co., Ltd., and was subjected to spray drying (hot air temperature = 110°C, discharged air temperature = 63°C). Thus, a P3HA powder containing 100 parts by weight of P3HA and 3 parts by weight of PVA was obtained. The primary particle diameter of the P3HA powder was 3.3 µm, while the mean particle diameter (D50) of the P3HA powder was 74.1 µm.

### (Redispersing)

The P3HA powder obtained as above and distilled water were mixed at a weight ratio of 1:1. After that, the P3HA powder was ground by means of a high-shear mill (Homogenizing Mixer MARK II Model manufactured by PRIMIX Corporation) at a shear rate of 22,000 s⁻¹ for 5 minutes to obtain an aqueous P3HA powder suspension with a solids concentration of 50 wt%. The volume median diameter (D50) of the P3HA powder in the aqueous suspension obtained by the redispersing was 3.2 µm. The pH of the aqueous suspension was 4. For the obtained aqueous suspension, the viscosity measurement and the Bingham yield stress calculation were performed based on the procedures described above. The results are listed in Table 1.

### [Example 2]

A P3HA powder was obtained, then an aqueous P3HA powder suspension was obtained, and the Bingham yield stress was calculated in the same manner as in Example 1, except that the PVA used was one known under the trade name Kuraray Poval L-9 (degree of saponification = 71 mol%, viscosity at 20°C of 4 wt% aqueous solution = 5.8 mPa•s). The results are listed in Table 1.

### [Example 3]

A P3HA powder was obtained, then an aqueous P3HA powder suspension was obtained, and the Bingham yield stress was calculated in the same manner as in Example 1, except that the PVA used was one known under the trade name Kuraray Poval L-11 (degree of saponification = 72.5 mol%, viscosity at 20°C of 4 wt% aqueous solution = 6.5 mPa•s). The results are listed in Table 1.

### [Example 4]

A P3HA powder was obtained, then an aqueous P3HA powder suspension was obtained, and the Bingham yield stress was calculated in the same manner as in Example 1, except that the PVA used was one known under the trade name Japan Vam JR-05 (degree of saponification = 72 mol%, viscosity at 20°C of 4 wt% aqueous solution = 5.5 mPa•s). The results are listed in Table 1.

### [Example 5]

A P3HA powder was obtained, then an aqueous P3HA powder suspension was obtained, and the Bingham yield stress was calculated in the same manner as in Example 1, except that the PVA used was one known under the trade name Mitsubishi Chemical NK-05R (degree of saponification = 73 mol%, viscosity at 20°C of 4 wt% aqueous solution = 5 mPa•s). The results are listed in Table 1.

### [Comparative Example 1]

A P3HA powder was obtained, then an aqueous P3HA powder suspension was obtained, and the Bingham yield stress was calculated in the same manner as in Example 1, except that the PVA used was one known under the trade name Kuraray Poval 5-88 (degree of saponification = 87.8 mol%, viscosity at 20°C of 4 wt% aqueous solution = 5 mPa•s) and that the time of the process using the high-shear mill was changed to 10 minutes. The primary particle diameter of the P3HA powder was 3.2 µm, the mean particle diameter (D50) of the P3HA powder was 84.1 µm, and the volume median diameter of the P3HA powder in the aqueous suspension resulting from the redispersing was 3.1 µm. The results are listed in Table 1.

### [Comparative Example 2]

A P3HA powder was obtained, then an aqueous P3HA powder suspension was obtained, and the Bingham yield stress was calculated in the same manner as in Example 1, except that the PVA used was one known under the trade name Kuraray Poval 22-88 (degree of saponification = 88 mol%, viscosity at 20°C of 4 wt% aqueous solution = 22.5 mPa•s) and that the time of the process using the high-shear mill was changed to 10 minutes. The results are listed in Table 1.

### [Comparative Example 3]

A P3HA powder was obtained, then an aqueous P3HA powder suspension was obtained, and the Bingham yield stress was calculated in the same manner as in Example 1, except that the PVA used was one known under the trade name Kuraray Poval 5-82 (degree of saponification = 81.5 mol%, viscosity at 20°C of 4 wt% aqueous solution = 4.85 mPa•s). The results are listed in Table 1.

### [Comparative Example 4]

A P3HA powder was obtained, then an aqueous P3HA powder suspension was obtained, and the Bingham yield stress was calculated in the same manner as in Example 1, except that the PVA used was one known under the trade name Kuraray Poval 3-80 (degree of saponification = 80 mol%, viscosity at 20°C of 4 wt% aqueous solution = 3.05 mPa•s). The results are listed in Table 1.

### [Comparative Example 5]

A P3HA powder was obtained, then an aqueous P3HA powder suspension was obtained, and the Bingham yield stress was calculated in the same manner as in Example 1, except that the PVA used was one known under the trade name Kuraray Poval 35-80 (degree of saponification = 80 mol%, viscosity at 20°C of 4 wt% aqueous solution = 32.4 mPa•s) and that the time of the process using the high-shear mill was changed to 10 minutes. The results are listed in Table 1.

### [Comparative Example 6]

A P3HA powder was obtained, then an aqueous P3HA powder suspension was obtained, and the Bingham yield stress was calculated in the same manner as in Example 1, except that the PVA used was one known under the trade name Kuraray Poval 40-80E (degree of saponification = 80 mol%, viscosity at 20°C of 4 wt% aqueous solution = 41 mPa•s) and that the time of the process using the high-shear mill was changed to 10 minutes. The results are listed in Table 1.

### [Comparative Example 7]

A P3HA powder was obtained, then an aqueous P3HA powder suspension was obtained, and the Bingham yield stress was calculated in the same manner as in Example 1, except that the PVA used was one known under the trade name Japan Vam JR-25E (degree of saponification = 79.5 mol%, viscosity at 20°C of 4 wt% aqueous solution = 48 mPa•s) and that the time of the process using the high-shear mill was changed to 10 minutes. The results are listed in Table 1.

**[Table 1]**

| | PVA | | | | Bingham yield stress of aqueous suspension [Pa] | | |
|---|---|---|---|---|---|---|---|
| | Trade name | Viscosity [mPa•s] | Degree of saponification [mol%] | Amount [parts by weight] | 25°C | 40°C | 50°C |
| Ex. 1 | Poval L-508W | 6.5 | 72.5 | 3 | 0.0 | 0.5 | 4.4 |
| Ex. 2 | Poval L-9 | 5.8 | 71 | 3 | 0.0 | 9.6 | 13.3 |
| Ex. 3 | Poval L-11 | 6.5 | 72.5 | 3 | 0.0 | 2.5 | 7.9 |
| Ex. 4 | Japan Vam JR-05 | 5.5 | 72 | 3 | 0.0 | 1.0 | 5.4 |
| Ex. 5 | Mitsubishi Chemical NK-05R | 5 | 73 | 3 | 0.0 | 1.1 | 5.4 |
| Comp. 1 | Poval 5-88 | 5 | 87.8 | 3 | 0.0 | 0.0 | 0.0 |
| Comp. 2 | Poval 22-88 | 22.5 | 88 | 3 | 0.0 | 0.0 | 0.0 |
| Comp. 3 | Poval 5-82 | 4.85 | 81.5 | 3 | 0.0 | 0.0 | 0.0 |
| Comp. 4 | Poval 3-80 | 3.05 | 80 | 3 | 0.0 | 0.0 | 0.0 |
| Comp. 5 | Poval 35-80 | 32.4 | 80 | 3 | 0.0 | 0.0 | 0.0 |
| Comp. 6 | Poval 40-80E | 41 | 80 | 3 | 0.0 | 0.0 | 0.0 |
| Comp. 7 | Japan Vam JL-25E | 48 | 79.5 | 3 | 0.0 | 0.0 | 0.0 |

Table 1 reveals the following facts. In Examples 1 to 5, the PVA used was one that has a degree of saponification of 50 to 79 mol% and a 4 wt% aqueous solution of which has a viscosity at 20°C of 2 to 20 mPa•s. While the Bingham yield stress was 0.0 Pa at 25°C, the Bingham yield stress had a high positive value at 40°C or 50°C. This indicates that the dispersibility of the P3HA powder and the application properties of the aqueous suspension are good at 25°C and that the aqueous suspension undergoes an increase in viscosity in response to heating and thus can resist running down when dried by heating after application.

In Comparative Examples 1 to 7, the PVA used was one for which at least the degree of saponification or the viscosity is outside the above range. The fact that the Bingham yield stress was 0.0 Pa at 40°C or 50°C indicates that the aqueous suspension does not undergo an increase in viscosity in response to heating and thus can readily run down when dried by heating after application.

### [Example 6]

The step of preparing a cell culture fluid was performed in the same manner as in Comparative Example 1 of WO 2019/142845 A1 to obtain P3HB3HH (3HB unit/3HH unit ratio = 96.6/3.4 (mol/mol), adjustment time in molecular weight adjustment step = 16 hours, weight-average molecular weight = 71 × 10⁴). Subsequently, a P3HA powder was obtained, then an aqueous P3HA powder suspension was obtained, and the Bingham yield stress was calculated in the same manner as in Example 1, except that the P3HB3HH was used. The primary particle diameter of the P3HA powder was 3.5 µm, the mean particle diameter (D50) of the P3HA powder was 74.4 µm, and the volume median diameter of the P3HA powder in the aqueous suspension resulting from the redispersing was 3.2 µm. The results are listed in Table 2.

### [Example 7]

The step of preparing a cell culture fluid was performed in the same manner as in Example 20 of WO 2019/142717 A1 to obtain P3HB3HH (3HB unit/3HH unit ratio = 94.9/5.1 (mol/mol), adjustment time in molecular weight adjustment step = 11 hours, weight-average molecular weight = 45 × 10⁴). Subsequently, a P3HA powder was obtained, then an aqueous P3HA powder suspension was obtained, and the Bingham yield stress was calculated in the same manner as in Example 1, except that the P3HB3HH was used. The primary particle diameter of the P3HA powder was 3.5 µm, the mean particle diameter of the P3HA powder was 70.4 µm, and the volume median diameter of the P3HA powder in the aqueous suspension resulting from the redispersing was 3.6 µm. The results are listed in Table 2.

**[Table 2]**

| | P3HB3HH | PVA | | | Bingham yield stress of aqueous suspension [Pa] | | | Particle diameter (D50) [µm] | | |
|---|---|---|---|---|---|---|---|---|---|---|
| | Proportion of 3HH [mol%] | Viscosity [mPa•s] | Degree of saponification [mol%] | Amount [parts by weight] | 25°C | 40°C | 50°C | Primary particle diameter of P3HA powder | Mean particle diameter of P3HA powder | Volume median diameter of P3HA powder in aqueous suspension |
| Ex. 1 | 10.1 | 6.5 | 72.5 | 3 | 0.0 | 0.5 | 4.4 | 3.3 | 74.1 | 3.2 |
| Ex. 6 | 3.4 | 6.5 | 72.5 | 3 | 0.0 | 0.9 | 6.3 | 3.5 | 74.4 | 3.2 |
| Ex. 7 | 5.1 | 6.5 | 72.5 | 3 | 0.0 | 0.4 | 3.3 | 3.5 | 70.4 | 3.6 |

Table 2 reveals that Examples 6 and 7 gave similar results to Example 1, despite the difference in the proportion of 3HH units between the P3HB3HH resins.

### [Example 8]

P3HB3HH (3HB unit/3HH unit ratio = 89.9/10.1 (mol/mol), weight-average molecular weight = 56 × 10⁴) was obtained in the same manner as in Example 1, except that the adjustment time in the molecular weight adjustment step was 11 hours. Subsequently, a P3HA powder was obtained, then an aqueous P3HA powder suspension was obtained, and the Bingham yield stress was calculated in the same manner as in Example 1, except that the P3HB3HH was used and that the time of the process using the high-shear mill was changed to 10 minutes. The primary particle diameter of the P3HA powder was 2.7 µm, the mean particle diameter of the P3HA powder was 73.4 µm, and the volume median diameter of the P3HA powder in the aqueous suspension resulting from the redispersing was 2.6 µm. The results are listed in Table 3.

### [Example 9]

P3HB3HH (3HB unit/3HH unit ratio = 89.9/10.1 (mol/mol), weight-average molecular weight = 76 × 10⁴) was obtained in the same manner as in Example 1, except that the adjustment time in the molecular weight adjustment step was 10 hours. Subsequently, a P3HA powder was obtained, then an aqueous P3HA powder suspension was obtained, and the Bingham yield stress was calculated in the same manner as in Example 1, except that the P3HB3HH was used and that the time of the process using the high-shear mill was changed to 10 minutes. The primary particle diameter of the P3HA powder was 2.7 µm, the mean particle diameter of the P3HA powder was 68.9 µm, and the volume median diameter (D50) of the P3HA powder in the aqueous suspension resulting from the redispersing was 2.9 µm. The results are listed in Table 3.

**[Table 3]**

| | P3HB3HH | PVA | | | Bingham yield stress of aqueous suspension [Pa] | | | Particle diameter (D50) [µm] | | |
|---|---|---|---|---|---|---|---|---|---|---|
| | Mw [× 10000] | Viscosity [mPa•s] | Degree of saponification [mol%] | Amount [parts by weight] | 25°C | 40°C | 50°C | Primary particle diameter of P3HA powder | Mean particle diameter of P3HA powder | Volume median diameter of P3HA powder in aqueous suspension |
| Ex. 1 | 22 | 6.5 | 72.5 | 3 | 0.0 | 0.5 | 4.4 | 3.3 | 74.1 | 3.2 |
| Ex. 8 | 56 | 6.5 | 72.5 | 3 | 0.0 | 0.6 | 4.4 | 2.7 | 73.4 | 2.6 |
| Ex. 9 | 76 | 6.5 | 72.5 | 3 | 0.0 | 0.8 | 4.8 | 2.7 | 68.9 | 2.9 |

Table 3 reveals that Examples 8 and 9 gave similar results to Example 1, despite the difference in weight-average molecular weight between the P3HB3HH resins.

### [Examples 10 to 12 and Comparative Examples 8 and 9]

A P3HA powder was obtained, then an aqueous P3HA powder suspension was obtained, and the Bingham yield stress was calculated in the same manner as in Example 1, except that the amount of the PVA was changed as shown in Table 4. In Examples 10 to 12 and Comparative Example 8, the primary particle diameter of the P3HA powder, the mean particle diameter of the P3HA powder, and the volume median diameter of the P3HA powder in the aqueous suspension resulting from the redispersing were also measured. The results are listed in Table 4.

**[Table 4]**

| | PVA | | | Bingham yield stress of aqueous suspension [Pa] | | | Particle diameter (D50) [µm] | | |
|---|---|---|---|---|---|---|---|---|---|
| | Viscosity [mPa•s] | Degree of saponification [mol%] | Amount [parts by weight] | 25°C | 40°C | 50°C | Primary particle diameter of P3HA powder | Mean particle diameter of P3HA powder | Volume median diameter of P3HA powder in aqueous suspension |
| Comp. 8 | 6.5 | 72.5 | 1.5 | 0.0 | 0.0 | 0.8 | 3.3 | 95.3 | 3.3 |
| Ex. 10 | 6.5 | 72.5 | 2 | 0.0 | 0.2 | 2.4 | 3.3 | 90.3 | 3.4 |
| Ex. 11 | 6.5 | 72.5 | 2.5 | 0.0 | 0.7 | 4.3 | 3.3 | 91.8 | 3.4 |
| Ex. 1 | 6.5 | 72.5 | 3 | 0.0 | 0.5 | 4.4 | 3.3 | 74.1 | 3.2 |
| Ex. 12 | 6.5 | 72.5 | 6 | 0.0 | 1.1 | 6.8 | 3.3 | 81.4 | 3.4 |
| Comp. 9 | 6.5 | 72.5 | 15 | 7.6 | 6.6 | 6.9 | - | - | - |

Table 4 reveals that Examples 10 to 12 gave similar results to Example 1. In Comparative Example 8, where the amount of the PVA was as small as 1.5 parts by weight, the Bingham yield stress was 0.0 Pa at 40°C. Although the Bingham yield stress showed a positive value at 50°C, the value was low. This leads to the conclusion that the effect of the PVA on the resistance to running down under heating is insufficient. In Comparative Example 9, where the amount of the PVA was as large as 15 parts by weight, the Bingham yield stress had a high value even at 25°C. This indicates that the dispersibility of the P3HA powder and the application properties of the aqueous suspension are poor.

### [Examples 13 to 15]

A P3HA powder was obtained, then an aqueous P3HA powder suspension was obtained, and the Bingham yield stress was calculated in the same manner as in Example 1, except that the solids concentration of the aqueous P3HA powder suspension (the proportion of the P3HA powder in the aqueous suspension) was changed as shown in Table 5 by changing the mixing ratio between the P3HA powder and distilled water. The results are listed in Table 5.

**[Table 5]**

| | PVA | | | Proportion of P3HA powder in aqueous suspension resulting from redispersing | Bingham yield stress of aqueous suspension [Pa] | | |
|---|---|---|---|---|---|---|---|
| | Viscosity [mPa•s] | Degree of saponification [mol%] | Amount [parts by weight] | [wt%] | 25°C | 40°C | 50°C |
| Ex. 13 | 6.5 | 72.5 | 3 | 40.0 | 0.0 | 0.2 | 1.2 |
| Ex. 14 | 6.5 | 72.5 | 3 | 45.0 | 0.0 | 0.3 | 2.1 |
| Ex. 1 | 6.5 | 72.5 | 3 | 50.0 | 0.0 | 0.5 | 4.4 |
| Ex. 15 | 6.5 | 72.5 | 3 | 55.0 | 0.0 | 2.0 | 12.0 |

Table 5 reveals that Examples 13 to 15 gave similar results to Example 1, despite the difference in solids concentration between the aqueous P3HA powder suspensions.

### [Examples 16 to 19]

A P3HA powder was obtained, then an aqueous P3HA powder suspension was obtained, and the Bingham yield stress was calculated in the same manner as in Example 1, except that the pH of the aqueous P3HA suspension was changed as shown in Table 6 by adjusting the amount of sulfuric acid added before the spray drying. The results are listed in Table 6.

In these examples, the pH of the aqueous P3HA powder suspension is substantially the same as the pH of the aqueous P3HA suspension.

**[Table 6]**

| | PVA | | | Proportion of P3HA powder in aqueous suspension resulting from redispersing | pH of aqueous suspension | Bingham yield stress of aqueous suspension [Pa] | | |
|---|---|---|---|---|---|---|---|---|
| | Viscosity [mPa•s] | Degree of saponification [mol%] | Amount [parts by weight] | [wt%] | - | 25°C | 40°C | 50°C |
| Ex. 1 | 6.5 | 72.5 | 3 | 50.0 | 4 | 0.0 | 0.5 | 4.4 |
| Ex. 16 | 6.5 | 72.5 | 3 | 50.0 | 5 | 0.0 | 0.8 | 4.6 |
| Ex. 17 | 6.5 | 72.5 | 3 | 50.0 | 6 | 0.0 | 1.1 | 5.3 |
| Ex. 18 | 6.5 | 72.5 | 3 | 50.0 | 7 | 0.0 | 1.1 | 5.1 |
| Ex. 19 | 6.5 | 72.5 | 3 | 50.0 | 8 | 0.0 | 0.6 | 2.9 |

Table 6 reveals that Examples 16 to 19 gave similar results to Example 1, despite the difference in pH between the aqueous P3HA suspensions and the difference in pH between the aqueous P3HA powder suspensions.

## Claims

1. A poly(3-hydroxyalkanoate) powder comprising:
a poly(3-hydroxyalkanoate) resin; and
a polyvinyl alcohol, wherein
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

2. The poly(3-hydroxyalkanoate) powder according to claim 1, wherein a pH measured for a dispersion of the poly(3-hydroxyalkanoate) powder dispersed in water at a concentration of 50 wt% is from 3 to 8.

3. The poly(3-hydroxyalkanoate) powder according to claim 1 or 2, wherein the poly(3-hydroxyalkanoate) resin comprises a copolymer of 3-hydroxybutyrate units and other hydroxyalkanoate units.

4. The poly(3-hydroxyalkanoate) powder according to claim 3, wherein the other hydroxyalkanoate units are 3-hydroxyhexanoate units.

5. A method for producing an aqueous suspension, comprising the step of dispersing the poly(3-hydroxyalkanoate) powder according to claim 1 or 2 in an aqueous medium.

6. An aqueous suspension comprising:
a poly(3-hydroxyalkanoate) powder; and
an aqueous medium, wherein
the poly(3-hydroxyalkanoate) powder comprises a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.

7. The aqueous suspension according to claim 6, wherein a proportion of the poly(3-hydroxyalkanoate) powder in the aqueous suspension is from 20 to 65 wt%.

8. The aqueous suspension according to claim 6 or 7, wherein the aqueous suspension has a pH of 3 to 8.

9. The aqueous suspension according to claim 6 or 7, wherein the aqueous suspension is an aqueous coating liquid.

10. A method for producing a laminate, comprising the step of applying the aqueous suspension according to claim 6 or 7 to at least one side of a substrate and drying the aqueous suspension by heating to form a resin layer on the substrate.

11. A laminate comprising:
a substrate layer; and
a resin layer located on at least one side of the substrate layer, wherein
the resin layer comprises a poly(3-hydroxyalkanoate) resin and a polyvinyl alcohol,
the polyvinyl alcohol has a degree of saponification of 50 to 79 mol%,
a 4 wt% aqueous solution of the polyvinyl alcohol has a viscosity at 20°C of 2 to 20 mPa•s, and
an amount of the polyvinyl alcohol is from 2 to 10 parts by weight per 100 parts by weight of the poly(3-hydroxyalkanoate) resin.
